# EUROPEAN PATENT APPLICATION

(11) **EP 3 327 568 A1**
(43) Date of publication of application: **30.05.2018**
(21) Application number: 17187081.9
(22) Date of filing: 21.08.2017
(51) Int. Cl.: G06F 9/4401

(54) **METHOD AND TERMINAL FOR DISPLAYING BOOT GRAPHIC AND STORAGE MEDIUM**

(30) Priority: 25.11.2016 CN 201611054736
(71) Applicant: GUANG DONG OPPO MOBILE TELECOMMUNICATIONS CORP., LTD., Dongguan, Guangdong 523860 (CN)
(72) Inventor: YI, Yongpeng, Dongguan, Guangdong (CN)
(74) Representative: Manitz Finsterwald Patentanwälte PartmbB

(57) **Abstract**

Disclosed are a method and a terminal for displaying a boot graphic as well as a storage medium. According to the method, a boot graphic is stored into a display cache of the terminal. A backlight of a display screen of the terminal is turned on. The boot graphic on the display screen is displayed.

## Description

### TECHNICAL FIELD

The present invention relates to communications, and in particular, to a method and a terminal for displaying a boot graphic as well as a storage medium.

### BACKGROUND

When a terminal (e.g., mobile phone) is started up, a boot graphic will be usually displayed. According to a related method for displaying a boot graphic, after a display screen of the terminal is powered on and initialized, a display function of the display screen will be enabled at first, and a channel for transmitting data from a display cache to the display screen is opened. Then, a backlight of the display screen is turned on, and the boot graphic is loaded into the display cache for display.

### SUMMARY

The embodiments of the present invention provide a method and a terminal for displaying a boot graphic as well as a storage medium, which can avoid a blurred screen during start-up.

According to a first aspect of the present invention, there is provided a method for displaying a boot graphic. The method includes storing the boot graphic into a display cache of a terminal, turning on a backlight of a display screen of the terminal and displaying the boot graphic on the display screen.

In an example, before storing the boot graphic into the display cache of the terminal, the method further includes enabling a display function of the display screen of the terminal and clearing a display cache of the terminal. After storing the boot graphic into the display cache of the terminal and before turning on the backlight of the display screen of the terminal, the method further includes opening a transmission channel for boot display data, and transmitting the boot graphic stored in the display cache to the display screen through the transmission channel for boot display data.

In an example, before storing the boot graphic into the display cache, the method further includes acquiring the boot graphic from a local memory of the terminal.

In an example, before storing the boot graphic into the display cache, the method further includes clearing the display cache of the terminal. After storing the boot graphic into the display cache of the terminal and before turning on the backlight of the display screen of the terminal, the method further includes opening a transmission channel for boot display data, and transmitting the boot graphic stored in the display cache to a display screen of the terminal through the transmission channel for boot display data and enabling a display function of the display screen.

In an example, the operation of enabling the display function of the display screen includes detecting whether the boot graphic has been completely transmitted to the display screen and executing the block of enabling the display function of the display screen when it is detected that the boot graphic has been completely transmitted to the display screen.

In an example, the method further includes opening the transmission channel for boot display data, and re-transmitting the boot graphic in the display cache to the display screen when it is detected that the boot graphic has not been completely transmitted to the display screen.

According to a second aspect of the present invention, there is provided a terminal for displaying a boot graphic. The terminal includes a first storage unit configured to store a boot graphic into a display cache of the terminal and a first backlight control unit configured to turn on a backlight of a display screen of the terminal and display the boot graphic on the display screen.

In an example, the terminal further includes a first display control unit configured to, before the first storage unit stores the boot graphic into the display cache of the terminal, enable a display function of the display screen of the terminal. The first storage unit is further configured to clear a display cache of the terminal. The terminal further includes a first channel control unit configured to, after the first storage unit stores the boot graphic into the display cache of the terminal and before the first backlight control unit turns on the backlight of the display screen of the terminal, open a transmission channel for boot display data, and transmit the boot graphic stored in the display cache to the display screen through the transmission channel for boot display data.

In an example, the terminal further includes a first acquisition unit configured to, before the first storage unit stores the boot graphic into the display cache, acquire the boot graphic from a local memory of the terminal.

In an example, the first storage unit is further configured to clear the display cache of the terminal before storing the boot graphic into the display cache. The terminal further includes a second channel control unit configured to, after the first storage unit stores the boot graphic into the display cache of the terminal and before the first backlight control unit turns on the backlight of the display screen of the terminal, open a transmission channel for boot display data, and transmit the boot graphic stored in the display cache to a display screen of the terminal through the transmission channel for boot display data and a second display control unit configured to, after the first storage unit stores the boot graphic into the display cache of the terminal and before the first backlight control unit turns on the backlight of the display screen of the terminal, enable a display function of the display screen.

In an example, the terminal further includes a detection unit, configured to detect whether the boot graphic has been completely transmitted to the display screen. The second display control unit is further configured to enable the display function of the display screen when it is detected that the boot graphic has been completely transmitted to the display screen.

In an example, the second display control unit is further configured to open the transmission channel for boot display data, and re-transmit the boot graphic in the display cache to the display screen when it is detected that the boot graphic has not been completely transmitted to the display screen.

According to a third aspect of the present invention, there is provided a storage medium, having stored therein processor-readable instructions, which when executed cause a processor to implement the abovementioned method for displaying a boot graphic.

According to the embodiments of the present invention, it is ensured that graphic data has been loaded into a display cache before a backlight is turned on for display by adjusting the execution order of all blocks for start-up of a terminal, thus avoiding a blurred screen during the start-up.

### BRIEF DESCRIPTION OF THE DRAWINGS

In order to more clearly describe the technical solutions in the embodiments of the present invention, the drawings used in the description of the embodiments will be simply introduced below. Clearly, the drawings described below are only some examples of the present invention. Other drawings may be obtained by a person skilled in the art without creative work based on these drawings.
Fig. 1 is a flowchart showing a method for displaying a boot graphic according to an embodiment of the present invention.
Fig. 2 is another flowchart showing a method for displaying a boot graphic according to another embodiment of the present invention.
Fig. 3 is a structural diagram illustrating a terminal according to an embodiment of the present invention.
Fig. 4 is another structural diagram illustrating a terminal according to an embodiment of the present invention.
Fig. 5 is an additional structural diagram illustrating a terminal according to an embodiment of the present invention.

### DETAILED DESCRIPTION

The technical solutions in the embodiments of the present invention will be clearly and completely described below in conjunction with the drawings in the embodiments of the present invention. Clearly, the described embodiments are only a part of embodiments of the present invention, rather than all of the embodiments. Based on the embodiments of the present invention, all of other embodiments, obtained by a person skilled in the art without creative work, fall within the scope of protection of the present invention.

According to the related method for displaying a boot graphic, before a backlight is turned on for display, graphic data has not been loaded yet in a display cache, thus resulting in a blurred screen during start-up. Therefore, the embodiments of the present invention provide a method for displaying a boot graphic. It is ensured that graphic data has been loaded into the display cache before the backlight is turned on for display, thus avoiding the blurred screen during start-up. The method for displaying a boot graphic provided in the embodiments of the present invention may be implemented in a terminal. The terminal includes, but is not limited to, a mobile phone, a tablet and a laptop computer.

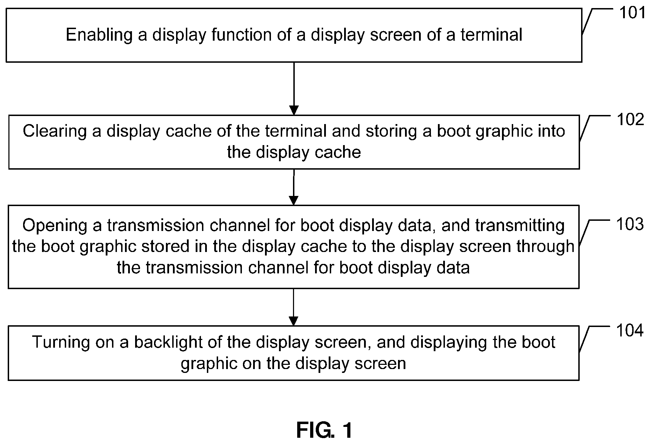

Fig. 1 illustrates a method for displaying a boot graphic according to an embodiment of the present invention. The method in the present embodiment includes the operations as follow. The method may begin at block 101.

At block 101, a display function of a display screen of a terminal is enabled.

Specifically, an initialization is performed at first during the start-up of the terminal. The display function of the display screen is enabled during the initialization. Specifically, the display function of the display screen may be enabled by means of writing a value into a 0x29 register.

At block 102, a display cache of the terminal is cleared, and a boot graphic is stored into the display cache.

Specifically, a hexadecimal value such as 0 or f may be fully written into the display cache to clear the display cache. After the display cache is cleared, the boot graphic is loaded into the cleared display cache.

Before block 102 is executed, the boot graphic may be acquired from a local memory of the terminal. The local memory of the terminal may reserve a certain storage space for storing boot graphics. These boot graphics may be pictures taken by a user or pictures downloaded from a server by the user, which is not specifically limited herein. The terminal may acquire a boot graphic from the local memory of the terminal according to a preset rule (e.g., according to a storage time), or may randomly acquire a boot graphic from the local memory of the terminal.

At block 103, a transmission channel for boot display data is opened, and the boot graphic stored in the display cache is transmitted to the display screen through the transmission channel for boot display data.

At block 104, a backlight of the display screen is turned on, and the boot graphic is displayed on the display screen.

In the present embodiment, by adjusting the execution order of all operations for start-up, after the display function of the display screen is enabled, before the transmission channel for boot display data is opened, the display cache is filled with the boot graphic. As such, after the backlight is turned on, the boot graphic may be directly displayed, thereby avoiding a blurred screen during the start-up.

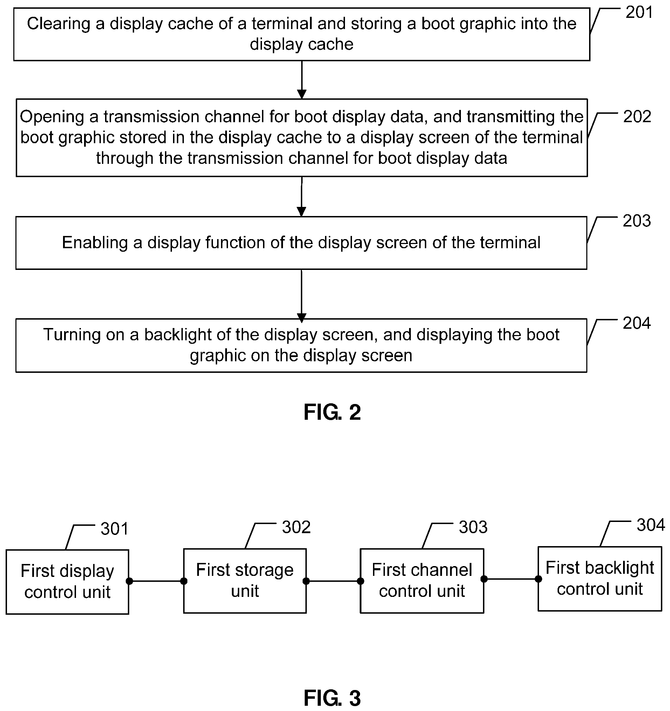

Another embodiment of the method for displaying a boot graphic provided in the present invention will be described below. As shown in Fig. 2, the method in the present embodiment includes the operations as follows.

At block 201, a display cache of a terminal is cleared, and a boot graphic is stored into the display cache.

Specifically, during initialization of the terminal, a display function of a display screen of the terminal may not be enabled at first. Instead, the display cache is cleared at first. Specifically, a hexadecimal value such as 0 or f may be fully written in the display cache to clear the display cache. After the display cache is cleared, the boot graphic is stored into the cleared display cache.

Before block 201 is executed, the boot graphic may be acquired from a local memory of the terminal. The local memory of the terminal may reserve a certain storage space for storing boot graphics. These boot graphics may be pictures taken by a user or pictures downloaded from a server by the user, which is not specifically limited herein.

At block 202, a transmission channel for boot display data is opened, and the boot graphic stored in the display cache is transmitted to the display screen through the transmission channel for boot display data.

Thereafter, it may be detected whether the boot graphic has been completely transmitted to the display screen. If the boot graphic has been completely transmitted to the display screen, block 203 is executed. Otherwise, block 202 is re-executed, and the boot graphic is retransmitted so as to ensure a good display effect.

At block 203, a display function of the display screen is enabled.

Specifically, after a first frame data is detected in the terminal, the display function of the display screen may be enabled by means of writing a value into a 0x29 register.

At block 204, a backlight of the display screen is turned on, and the boot graphic is displayed on the display screen.

In the present embodiment, by adjusting the execution order of all operations for start-up, before the transmission channel for boot display data is opened, the boot graphic is loaded to the display cache. After it is detected that the boot graphic has been completely transmitted to the display screen, the display function of the display screen is enabled. Thus, after the backlight is turned on, the boot graphic may be directly displayed, thereby avoiding a blurred screen during the start-up.

In order to better implement the method described in the embodiment corresponding to Fig. 1, the present invention also provides a terminal. As shown in Fig. 3, the terminal in the present embodiment includes a first display control unit 301, a first storage unit 302, a first channel control unit 303 and a first backlight control unit 304.

The first display control unit 301 is configured to enable a display function of a display screen of the terminal.

The first storage unit 302 is configured to clear a display cache of the terminal, and store a boot graphic into the display cache.

The first channel control unit 303 is configured to open a transmission channel for boot display data, and transmit the boot graphic stored in the display cache to the display screen through the transmission channel for boot display data.

The first backlight control unit 304 is configured to turn on a backlight of the display screen, and display the boot graphic on the display screen.

Further, the terminal further includes a first acquisition unit configured to acquire the boot graphic from a local memory of the terminal.

It is noted that when the boot graphic is displayed, the terminal provided in the present embodiment is only illustrated with the abovementioned functional modules. In practice, the abovementioned functions may be allocated to and implemented by different functional modules as required. That is, an internal structure of a device may be divided into different functional modules to complete all or part of the functions described above. In addition, the terminal provided in the present embodiment relates to the same concept as the method for displaying boot graphic described in the embodiment corresponding to Fig. 1. A specific implementation process refers to the method embodiment, which will not be elaborated herein.

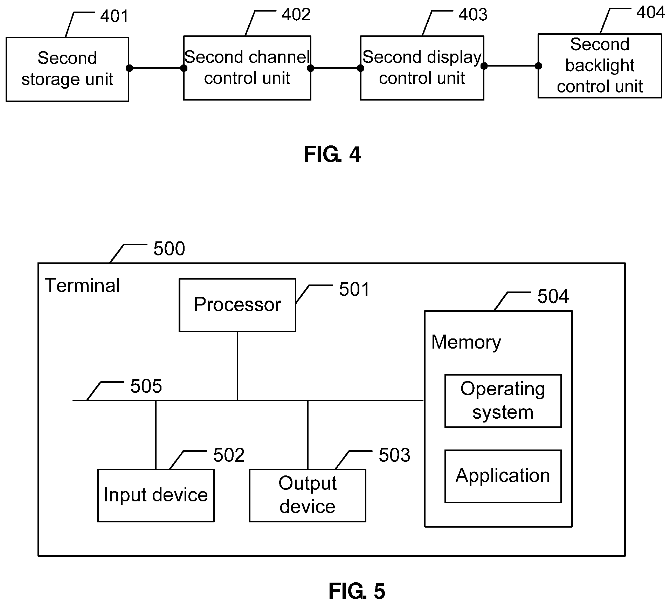

In order to better implement the method described in the embodiment corresponding to Fig. 2, the present invention also provides a terminal. As shown in Fig. 4, the terminal in the present embodiment includes a second storage unit 401, a second channel control unit 402, a second display control unit 403 and a second backlight control unit 404.

The second storage unit 401 is configured to clear a display cache of the terminal, and store a boot graphic into the display cache.

The second channel control unit 402 is configured to open a transmission channel for boot display data, and transmit the boot graphic stored in the display cache to a display screen of the terminal through the transmission channel for boot display data.

The second display control unit 403 is configured to enable a display function of the display screen.

The second backlight control unit 404 is configured to turn on a backlight of the display screen, and display the boot graphic on the display screen.

Further, the terminal further includes a second acquisition unit configured to acquire the boot graphic from a local memory of the terminal.

Further, the terminal further includes a detection unit configured to detect whether the boot graphic has been completely transmitted to the display screen.

The second display control unit 403 is specifically configured to enable, when it is detected that the boot graphic has been completely transmitted to the display screen, the display function of the display screen.

Further, the second channel control unit 402 is further configured to open, when it is detected that the boot graphic has not been completely transmitted to the display screen, the transmission channel for boot display data, and re-transmit the boot graphic in the display cache to the display screen.

It is noted that when the boot graphic is displayed, the terminal provided in the present embodiment is only illustrated with the abovementioned functional modules. In practice, the abovementioned functions may be allocated to and implemented by different functional modules as required. That is, an internal structure of a device is divided into different functional modules to complete all or part of the functions described above. In addition, the terminal provided in the present embodiment relates to the same concept as the method for displaying boot graphic described in the embodiment corresponding to Fig. 2. A specific implementation process refers to the method embodiment, which will not be elaborated herein.

Fig. 5 illustrates a terminal according to an embodiment of the present invention. As shown in Fig. 5, the terminal 500 may include at least one processor 501, at least one input device 502, at least one output device 503, a memory 504 and other components. Herein, these components are in communication connection through one or more buses 505. A person skilled in the art may understand that the structure of the terminal shown in Fig. 5 does not form limits to the terminal in the embodiment of the present invention. The structure may be a bus type structure or a star type structure, and the terminal may further include more or less than the illustrated parts, or some combined parts, or parts in different layouts.

Herein, the processor 501 is a control centre of the terminal. All parts of the whole terminal are connected by using various interfaces and lines, and various functions and processing data of the terminal are executed by running or executing a program and/or module stored in the memory 504 and calling data stored in the memory 504. The processor 501 may consist of Integrated Circuits (IC). For example, the processor may consist of a single packaged IC or may be formed by connecting multiple packaged ICs having the same function or different functions. For example, the processor 501 may include only a Central Processing Unit (CPU). Alternatively, the processor 501 may include a combination of a CPU, a Digital Signal Processor (DSP), a Graphic Processing Unit (GPU) and various control chips. In the embodiment of the present invention, the CPU may be a single-operation core or a multi-operation core.

The input device 502 may include a standard touch screen, a keyboard or the like, or may include a cable interface, a radio interface or the like.

The output device 503 may include a display screen, a loudspeaker or the like, or may include a cable interface, a radio interface or the like.

The memory 504 may be used for storing software program and modules. The processor 501, the input device 502 and the output device 503 execute various functions and process data of the terminal by calling the software program or the modules stored in the memory 504. The memory 504 mainly includes a program storage area and a data storage area. The program storage area may store an operating system, an application needed by at least one function or the like. The data storage area may store data created according to usage of the terminal. In the embodiment of the present invention, the operating system may be an Android system, an IOS or a Windows operating system.

Specifically, the processor 501 calls an application stored in the memory to execute the operations of enabling a display function of a display screen of a terminal; clearing a display cache of the terminal, and storing a boot graphic into the display cache; opening a transmission channel for boot display data, and transmitting the boot graphic stored in the display cache to the display screen through the transmission channel for boot display data; and turning on a backlight of the display screen, and displaying the boot graphic on the display screen.

In at least one alternative embodiment, the processor 501 calls an application stored in the memory to execute the operations of clearing a display cache of a terminal, and storing a boot graphic into the display cache; opening a transmission channel for boot display data, and transmitting the boot graphic stored in the display cache to a display screen of the terminal through the transmission channel for boot display data; enabling a display function of the display screen; and turning on a backlight of the display screen, and displaying the boot graphic on the display screen.

Specifically, the terminal provided in the present embodiment may implement part or all of flows in the method embodiments corresponding to Fig. 1 and Fig. 2 of the present invention, which will not be elaborated herein.

In the embodiments of the present invention, by adjusting the execution order of all operations for start-up, it is ensured that graphic data has been loaded into the display cache before the backlight is turned on for display, thereby avoiding a blurred screen during the start-up.

It should be understood that the disclosed system, device and method may be implemented in another manner. The device embodiment described above is only schematic. For example, division of the modules is only based on respective logic functions, and thus other division manners may be adopted in practice. For example, multiple units or components may be combined or integrated into another system, or some characteristics may be omitted or not executed. In addition, coupling or direct coupling or communication connection between displayed or discussed components may be indirect coupling or communication connection, implemented through some interfaces, of the device or the units, and may be electrical and mechanical or in other forms. The units described as separate parts may or may not be physically separated, and parts displayed as units may or may not be physical units. Namely, the units may be located in the same place, or may also be distributed to multiple network units. A part or all of the units may be selected to achieve the respective purpose of the solutions of the embodiments as required.

In addition, each function unit in each embodiment of the present invention may be integrated into a processing unit, each unit may also exist independently, and two or more than two units may also be integrated into a unit. The abovementioned integrated unit may be implemented in a hardware form, and may also be implemented in a form of software function unit. When being implemented in a form of software function unit and sold or used as an independent product, the integrated unit may also be stored in a computer-readable storage medium. Based on such an understanding, the technical solutions of the embodiments of the present invention substantially or parts making contributions to the conventional art may be embodied in form of software product, and the computer software product is stored in a storage medium, including a plurality of instructions configured to enable a computer device (which may be a personal computer, a server, network equipment or the like) to execute all or part of the method in each embodiment of the present invention. The abovementioned storage medium includes various media capable of storing program codes, such as a U disk, a mobile hard disk, a Read-Only Memory (ROM), a Random Access Memory (RAM), a magnetic disk, an optical disk or the like.

The abovementioned embodiments are only used to describe the technical solutions of the present invention but not intended to make limitations. Although the present invention is described in detail with reference to the aforementioned embodiments, those skilled in the art should understand that the technical solution in each of the aforementioned embodiments can be modified or part of technical features can be equivalently replaced. These modifications or replacements do not make the essence of the corresponding technical solutions depart from the spirit and scope of the technical solution of each embodiment of the present invention.

## Claims

1. A method for displaying a boot graphic, comprising:
storing the boot graphic into a display cache of a terminal;
turning on a backlight of a display screen of the terminal; and
displaying the boot graphic on the display screen.

2. The method according to claim 1, wherein before storing the boot graphic into the display cache of the terminal, the method further comprises:
enabling a display function of the display screen of the terminal; and
clearing a display cache of the terminal, and
wherein after storing the boot graphic into the display cache of the terminal and before turning on the backlight of the display screen of the terminal, the method further comprises:
opening a transmission channel for boot display data, and transmitting the boot graphic stored in the display cache to the display screen through the transmission channel for boot display data.

3. The method according to claim 1, wherein before storing the boot graphic into the display cache, the method further comprises:
acquiring the boot graphic from a local memory of the terminal.

4. The method according to claim 1, wherein before storing the boot graphic into the display cache, the method further comprises:
clearing the display cache of the terminal, and
wherein after storing the boot graphic into the display cache of the terminal and before turning on the backlight of the display screen of the terminal, the method further comprises:
opening a transmission channel for boot display data, and transmitting the boot graphic stored in the display cache to a display screen of the terminal through the transmission channel for boot display data; and
enabling a display function of the display screen.

5. The method according to claim 4, wherein enabling the display function of the display screen comprises:
detecting whether the boot graphic has been completely transmitted to the display screen; and
executing the block of enabling the display function of the display screen when it is detected that the boot graphic has been completely transmitted to the display screen.

6. The method according to claim 5, further comprising:
opening the transmission channel for boot display data, and re-transmitting the boot graphic in the display cache to the display screen when it is detected that the boot graphic has not been completely transmitted to the display screen.

7. A terminal, comprising:
a first storage unit configured to store a boot graphic into a display cache of the terminal; and
a first backlight control unit configured to turn on a backlight of a display screen of the terminal and display the boot graphic on the display screen.

8. The terminal according to claim 7, further comprising:
a first display control unit configured to, before the first storage unit stores the boot graphic into the display cache of the terminal, enable a display function of the display screen of the terminal; wherein the first storage unit is further configured to clear a display cache of the terminal, and
a first channel control unit configured to, after the first storage unit stores the boot graphic into the display cache of the terminal and before the first backlight control unit turns on the backlight of the display screen of the terminal, open a transmission channel for boot display data, and transmit the boot graphic stored in the display cache to the display screen through the transmission channel for boot display data.

9. The terminal according to claim 7, further comprising:
a first acquisition unit configured to, before the first storage unit stores the boot graphic into the display cache, acquire the boot graphic from a local memory of the terminal.

10. The terminal according to claim 7, wherein the first storage unit is further configured to clear the display cache of the terminal before storing the boot graphic into the display cache, and
wherein the terminal further comprises:
a second channel control unit configured to, after the first storage unit stores the boot graphic into the display cache of the terminal and before the first backlight control unit turns on the backlight of the display screen of the terminal, open a transmission channel for boot display data, and transmit the boot graphic stored in the display cache to a display screen of the terminal through the transmission channel for boot display data; and
a second display control unit configured to, after the first storage unit stores the boot graphic into the display cache of the terminal and before the first backlight control unit turns on the backlight of the display screen of the terminal, enable a display function of the display screen.

11. The terminal according to claim 10, further comprising:
a detection unit, configured to detect whether the boot graphic has been completely transmitted to the display screen; and
wherein the second display control unit is further configured to enable the display function of the display screen when it is detected that the boot graphic has been completely transmitted to the display screen.

12. The terminal according to claim 11, wherein the second display control unit is further configured to
open the transmission channel for boot display data, and re-transmit the boot graphic in the display cache to the display screen when it is detected that the boot graphic has not been completely transmitted to the display screen.

13. A storage medium, having stored therein processor-readable instructions that, when executed by a processor, cause the processor to perform the method for displaying a boot graphic according to any one of claims 1-6.
